# FASCICULE DE BREVET EUROPEEN

(11) **EP 2 709 584 B1**
(45) Date de publication et mention de la délivrance du brevet: **06.06.2018**
(21) Numéro de dépôt: 12728716.7
(22) Date de dépôt: 16.05.2012
(51) Int. Cl.: A61K 8/33, A61K 8/34, A23L 27/20, C11B 9/00, A61Q 13/00

(54) **UTILISATION SENSORIELLE DES DÉRIVÉS DU 6-CYCLOPENTYLIDÈNEHEXANE**
SENSORISCHE VERWENDUNG VON 6-CYCLOPENTYLIDENHEXANDERIVATEN
SENSORY USE OF 6-CYCLOPENTYLIDENEHEXANE DERIVATIVES

(30) Priorité: 17.05.2011 FR 1154295
(43) Date de publication de la demande: 26.03.2014
(73) Titulaire: V. Mane Fils, 06620 Bar sur Loup (FR)
(72) Inventeur: MURATORE, Agnès, F-06740 Chateauneuf (FR); CHANOT, Jean-Jacques, F-06530 Speracedes (FR)
(74) Mandataire: Cabinet Plasseraud
(86) Numéro de dépôt international: PCT/FR2012/051113
(87) Numéro de publication internationale: WO 2012/156649

(56) Documents cités:
- US-A1- 2003 225 142
- US-B1- 6 441 052
- LUTZ F. TIETZE ET AL: "Inter- and intramolecularhetero diels-alder reactions, XXI. Intramolecularhetero diels-alder reaction of alkylidene-1,3-dicarbonyl compounds. Experimental evidence for an asymmetric transition state", CHEMISCHE BERICHTE, vol. 121, no. 3, 1 mars 1988 (1988-03-01), pages 499-506, XP055026659, ISSN: 0009-2940, DOI: 10.1002/cber.19881210318

## Description

La présente invention a pour objet l'utilisation des dérivés du 6-cyclopentylidènehexane dans l'industrie de la chimie et en particulier en parfumerie, en cosmétique, en parapharmacie, dans l'industrie des détergents et alimentaire. Plus précisément, l'invention concerne l'utilisation du 6-cyclopentylidènehexan-1-ol et du 6-cyclopentylidènehexanal en tant qu'agents sensoriels ou organoleptiques tels que par exemple des agents parfumants ou olfactifs ou des agents aromatiques ou gustatifs. L'invention vise également des compositions et des produits dotés de propriétés sensorielles ou organoleptiques, en particulier, des propriétés gustatives et olfactives comprenant un dérivé du 6-cyclopentylidènehexane. Par ailleurs, la présente invention a également trait à un procédé d'obtention desdits dérivés du 6-cyclopentylidènehexane.

Tietze et al., (Chem. Ber. 121, 499-506, 1988) décrivent la synthèse et l'utilisation du 6-cyclopentylidènehexan-1-ol et du 6-cyclopentylidènehexanal comme certains intermédiaires réactionnels préparés en vue de l'obtention de composés - les cycloadduits et ène-adduits - dont l'analyse démontre l'état de transition asymétrique de la réaction *hétéro* intramoleculaire de Diels-Alder.

US 2003/0225142 décrit par ailleurs la préparation du 6-cyclopentylidènehexan-1-ol comme intermédiaire de synthèse d'antagonistes de la nicotine inhibiteurs des récepteurs nicotiniques.

Ni Tietze et al., ni US 2003/0225142, ne fait mention des propriétés sensorielles du 6-cyclopentylidènehexan-1-ol et du 6-cyclopentylidènehexanal. Aucun de ces documents ne décrit une quelconque application industrielle directe de ces composés. A fortiori aucune mention de leurs propriétés sensorielles, organoleptiques, aromatiques ou olfactives ou de leur utilisation en parfumerie, en cométique, en para-pharmacie, dans l'industrie des détergents et des produits d'hygiène et d'entretien ménager ou dans l'industrie alimentaire n'y figure.

Le géraniol [CAS n° 106-24-1] et le citronellol [CAS n° 106-22-9] sont parmi les alcools les plus couramment décrits et employés pour leurs notes fleuries, rosées, citronnées. Le géraniol est décrit comme fleuri, doux, rosé, citronné; le citronellol est fleuri, rosé, doux et citronné.

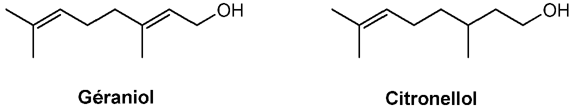

Les composés les plus connus pour leurs notes marines, ozoniques sont des dérivés de type benzodioxepinone (Helvetica Chimica Acta, 2007, 90, 1245-1265) comme la Calone® (Pfizer and Co., Etats-Unis) ou 7-méthyl-3,4-dihydro-2H-1,5-benzodioxepin-3-one (US 3517031) ou encore comme l'Azurone® (Givaudan, Suisse) ou 7-(3-méthylbutyl)benzo[B][l,4]dioxepin-3-one (EP1136481). Le t*rans*-2-dodécénal est un des composés connu et très utilisé en parfumerie, pour sa note aldéhydée, orange, grasse (Perfumer & Flavorist, 2009, 34, 26-28).

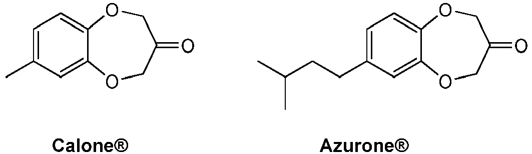

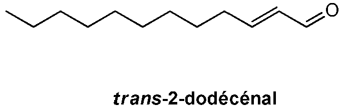

La plupart des composés de la famille des aldéhydes odorants dotés de senteurs aqueuses, ozoniques sont plutôt classés dans la famille des notes florales, notes qui prédominent. Nous pouvons citer par exemple le 2-méthyl-3-(3',4'-méthylènedioxyphényl)-propanal (GB841921) ou le 3-(4-éthylphényl)-2,2-diméthylpropanal (Perfumer & Flavorist, 2009, 34, 18-19), respectivement commercialisés sous les dénominations commerciales Helional® et Floralozone® ( Internationl Flavors & Fragrances, Etats-Unis).

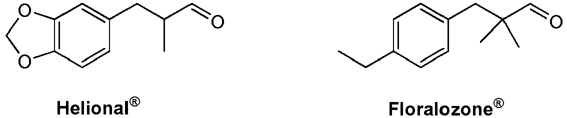

Les composés employés de façon récurrente dans les biens de consommation aromatiques et parfumantes, ont un caractère allergisant et/ou sensibilisant accru du fait d'expositions répétées des utilisateurs. C'est le cas en particulier du géraniol et du citronellol, deux des 26 composés listés pour leur propriétés allergisantes au sens de la directive européenne 2003/15/CE fixant la liste des substances qui ne peuvent être utilisées dans les produits cosmétiques en dehors des restriction et conditions fixées. L'augmentation notable des exigences réglementaires ou normatives répercute sur l'industrie des arômes et des parfums des contraintes toujours plus drastiques. En conséquence, il est important pour cette industrie de disposer de composés alternatifs, dotés de caractéristiques sensorielles, organoleptiques, olfactives ou gustatives, au moins comparables, voire accrues, et économiquement viables.

Par ailleurs le coût de production des composés connus tend également à devenir une contrainte qu'il importe de mieux maîtriser. Aussi est-il par exemple opportun de limiter le nombre d'étapes de synthèse ou encore le coût des matières premières. A titre d'illustration, le procédé de synthèse du 7-méthyl-3,4-dihydro-2H-1,5-benzodioxepin-3-one ou Calone® (Pfizer and Co., Etats-Unis) comporte trois étapes (US 3517031). Le substrat de départ est le pyrocatechol qui est une matière première au coût significativement élevé.

Enfin, peu de composés connus dégagent une puissance et une ténacité sensorielle suffisante pour une utilisation dans l'industrie des parfums et des arômes. Nombreux sont les composés aux propriétés sensorielles modérées, tant du point de vue qualitatif que quantitatif, ce qui oblige à augmenter leur teneur finale en composition. Aussi existe t-il un besoin d'identifier des composés dotés de telles caractéristiques au moins comparables sinon avantageuses.

L'invention a notamment pour objectif de pallier à ces inconvénients en fournissant des dérivés du 6-cyclopentylidènehexane de formule générale (I) dotés de propriétés sensorielles d'intérêt et pour lesquels la simplicité de mise en oeuvre des réactions, le faible nombre d'étapes, le faible coût et la disponibilité en grande quantité des matières premières nécessaires, les conditions réactionnelles d'oxygénation et de température douces et l'évincement de réactifs susceptibles de nuire à la santé et aux propriétés sensorielles des composés finaux, représentent autant d'avantages significatifs pour une application industrielle. Un des intérêts supplémentaires de l'invention est l'aisance avec laquelle la synthèse des dérivés est adaptable aux chaînes existantes de production industrielle.

Un autre objectif de l'invention est de fournir des composés aux propriétés sensorielles puissantes et tenaces en vue notamment de limiter leur teneur finale dans des compositions olfactives ou gustatives prêtes à emploi, ainsi que des compositions ou produits parfumés comprenant un composé de formule (I) dont la synthèse présente par ailleurs l'avantage d'utiliser des réactifs moins chers et plus facilement accessibles au regard de procédés connus dans l'art antérieur.

L'invention vise également un procédé de synthèse du 6-cyclopentylidènehexan-1-ol (I') en seulement une étape à partir d'une matière première économique et courante, la cyclopentanone. Puis, le 6-cyclopentylidènehexanal (I") est synthétisé en une seule étape supplémentaire par oxydation du 6-cyclopentylidènehexan-1-ol (I') dans des conditions réactionnelles douces.

Ces objectifs, ainsi que d'autres qui apparaîtront par la suite, sont atteints par la présente invention dont l'objet porte sur l'utilisation sensorielle ou organoleptique des dérivés du 6-cyclopentylidènehexane de formule générale (I): 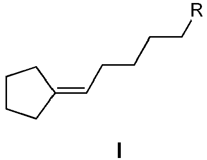 pour lequel R représente un radical CHO ou un radical CH₂OH.

En d'autres termes, l'invention concerne plus particulièrement l'utilisation du 6-cyclopentylidènehexan-1-ol de formule I' ou du 6-cyclopentylidènehexanal de formule I" comme agent sensoriel ou organoleptique.

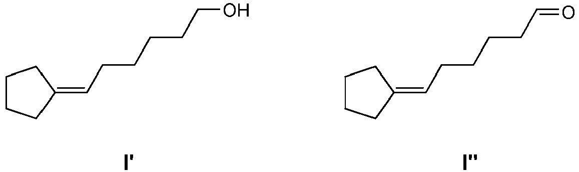

L'invention a également trait à une méthode visant à conférer, modifier, améliorer ou renforcer les propriétés sensorielles ou organoleptiques d'une composition ou d'un article en y ajoutant une quantité efficace d'au moins un composé de formule (I).

Selon un avantage particulier, l'invention porte également sur l'utilisation du 6-cyclopentylidènehexan-1-ol de formule (I') comme agent sensoriel ou agent organoleptique doté d'une note olfactive fleurie, et plus particulièrement doté d'une note rosée, citronnée et, sur l'utilisation du 6-cyclopentylidènehexanal de formule (I") comme agent sensoriel ou organoleptique exhalant des notes aqueuses, aldéhydées dont les effluves olfactives tendent vers des émanations, marines, ozoniques, fruitées.

On entend par « *agent sensoriel»* ou « *composé sensoriel* » tout composé susceptible de modifier, améliorer ou renforcer la perception sensorielle d'une substance, d'une composition, d'un article par un utilisateur et notamment la perception organoleptique. Aux fins de la demande, un agent sensoriel peut notamment être un agent organoleptique en ce qu'il est doté d'une propriété organoleptique, en particulier olfactive ou gustative. Ainsi, à titre d'exemple préférentiel, l'agent sensoriel selon l'invention consiste en l'un des agents organoleptiques suivants :
- un agent parfumant, susceptible de conférer, modifier, améliorer ou renforcer la perception olfactive d'une substance, d'une composition ou d'un article ; les agents parfumant recouvrent également les agents de masquage d'odeur ou de neutralisation d'odeur susceptibles de réduire ou d'éliminer la perception d'une odeur générée par une ou plusieurs molécules entrant dans la composition d'un produit ;
- un agent aromatique susceptible de conférer, modifier, améliorer ou renforcer la perception gustative d'une substance, d'une composition ou d'un article.

En effet, de façon surprenante, la Demanderesse met en évidence qu'il émane des composés de formule (I) une expérience sensorielle d'intérêt en ce qu'elle est associée à des notes rares, agréables et très recherchées dans le domaine des arômes et des parfums qui, par ailleurs s'avère singulière, puissante et/ou persistante. Au vu des produits de l'art antérieur susmentionnés, cette singularité est comparable voire avantageuse comme en témoigne les données des tableau 1 et 2 des exemples 1 et 2. Elle est notablement supérieure au regard de nombreux autres composés connus de l'homme de l'art.

Ainsi, le 6-cyclopentylidènehexan-1-ol (I') exhale une note fleurie très forte et grasse. Plus particulièrement, selon un panel de parfumeurs, ce composé est associé à des émanations rosées et citronnées très puissantes.

Le 6-cyclopentylidènehexanal (I") possède quant à lui une note plus aqueuse, très forte, diffusive, dotée d'une rémanence remarquable et décrite plus précisément comme étant une note marine, ozonique, aldéhydée, fruitée selon le même panel de parfumeurs.

Ces composés trouvent donc tout leur intérêt comme ingrédient organoleptique, odorant et/ou aromatique, dans le domaine de la parfumerie, la cosmétique, la parapharmacie, dans l'industrie des détergents et des produits d'hygiène et d'entretien et dans l'industrie alimentaire.

La présente invention a également pour objet une composition organoleptique comprenant au moins un dérivé du 6-cyclopentylidènehexane de formule générale (I), ainsi qu'un procédé pour modifier les propriétés sensorielles d'une substance, d'une composition ou d'un article comprenant au moins une des étapes suivantes : l'addition à ladite substance, ladite composition ou ledit article ou l'application sur ledit article d'un dérivé du 6-cyclopentylidènehexane de formule générale (I).

De façon préférentielle, la composition organoleptique selon l'invention est une composition parfumante ou une composition aromatique.

La présente invention a de préférence pour objet l'utilisation d'un composé de formule (I) comme agent parfumant pour conférer, modifier, ou renforcer les propriétés olfactives d'une substance, d'une composition ou d'un article ainsi que l'utilisation d'un composé de formule (I) comme agent aromatique pour conférer, modifier, ou renforcer les propriétés gustatives d'une substance, d'une composition ou d'un article.

Le 6-cyclopentylidènehexan-1-ol (I') permet de donner à une substance, une composition ou un article une note fleurie avec des émanations rosées et citronnées.

Le 6-cyclopentylidènehexanal (I") permet de donner à une substance, une composition ou un article une note aqueuse, marine, ozonique, aldéhydée et fruitée.

Par "composition organoleptique", on désigne un mélange comprenant au moins un composé organoleptique auquel s'ajoute(nt) un ou plusieurs ingrédients connus de l'homme de l'art tels qu'un solvant, un support solide ou liquide ou véhicule, un adjuvant, un fixateur, un composé odorant et/ou aromatique, etc..., lequel mélange est apte à être utilisé pour conférer, modifier, améliorer ou renforcer les propriétés organoleptiques, notamment olfactives ou gustatives, d'une substance, d'une composition ou d'un article.

A titre d'exemple non limitatif, une composition organoleptique peut être une composition parfumante ou une composition aromatique.

Ladite composition organoleptique peut se présenter sous forme d'une composition de base, à diluer préalablement à l'emploi, ou sous forme d'une composition finie, prête à l'emploi. Elle peut être liquide ou solide.

La composition organoleptique selon l'invention, qu'elle soit parfumante ou aromatique, de base ou prête à emploi, liquide ou solide, peut comprendre :
- au moins un dérivé du 6-cyclopentylidènehexane de formule (I),
- au moins un support ou véhicule connu de l'homme de l'art comme étant approprié à cet effet, c'est-à-dire organoleptiquement acceptable, notamment au regard de son innocuité et au regard de ses caractéristiques, et généralement relativement neutre d'un point de vue organoleptique, tel qu'un solvant ou une émulsion,
- optionnellement, au moins un adjuvant connus de l'homme de l'art, c'est à dire un ingrédient capable de modifier, conférer ou augmenter une caractéristique additionnelle telle que la couleur, la stabilité physico-chimique, la texture de ladite composition, et
- optionnellement, au moins un co-ingrédient parfumant ou aromatique connus de l'homme de l'art.

La présente invention a plus particulièrement pour objet une composition parfumante ou une composition aromatique comprenant un dérivé du 6-cyclopentylidènehexane de formule (I).

Par « composition parfumante », on désigne un mélange comprenant au moins un composé odorant auquel s'ajoute(nt) un ou plusieurs ingrédients connus de l'homme de l'art tels qu'un solvant, un support solide ou liquide ou véhicule, un adjuvant, un fixateur, un autre composé odorant et/ou aromatique, etc..., lequel mélange est apte à être utilisé pour conférer, modifier, améliorer ou renforcer les propriétés olfactives d'une substance, d'une composition ou d'un article. Au sens de la présente invention, une composition parfumante est apte à être utilisée dans le domaine de la parfumerie, de la cosmétique, de la parapharmacie, dans l'industrie des détergents, des produits d'hygiène ou d'entretien ménager.

La composition parfumante selon l'invention peut se présenter sous forme d'une composition de base, à diluer préalablement à l'emploi, ou bien sous forme d'une composition finie, prête à l'emploi. Elle peut être liquide ou solide.

Le support ou véhicule parfum acceptable des compositions parfumantes à usage ménager peut-être tout type de support ou véhicule parfum connu et approprié à cet effet.

Dans le domaine de la parfumerie, de la cosmétique, de la parapharmacie ou des produits d'hygiène corporelle, la composition parfumante selon l'invention doit être apte à être mise en contact avec les diverses parties superficielles du corps humain (épiderme, système pileux et capillaire, ongles, lèvres et organes génitaux externes) ou avec les dents ou les muqueuses buccales, en vue de les nettoyer, de les parfumer, d'en modifier l'aspect et/ou corriger les odeurs corporelles et/ou de les protéger ou de les maintenir en bon état, tel que définie par la Directive 76/768/CEE.

A titre illustratif et non limitatif, on peut citer comme exemple de support ou véhicule parfum en vue d'un usage corporel: le diethyl phthalate (DEP, CAS 84-66-2) ou le 2- (2-ethoxyethoxy)- éthanol (EMK, CAS 111-90-0). De préférence, le support ou véhicule parfum est l'éthanol (CAS 64-17-5), le propylène glycol (PG, CAS 57-55-6), le dipropylène glycol (DPG, CAS 110-98-5), l'isopropyle myristate (IPM, CAS 110-27-0), le triéthyle citrate (TEC, CAS 77-93-0), ou le méthyl ester hydrogéné de résinate (CAS 8050-15-5). En revanche toute substance considérée comme cancérogène, mutagène ou toxique pour la reproduction et/ou classée CMR au sens de l'annexe I de la Directive 67/548/CEE figurent parmi les supports ou véhicules exclus du champ de la présente invention en vue d'un usage corporel.

Par « composition aromatique », on désigne un mélange comprenant au moins un ingrédient acceptable d'un point de vue alimentaire possédant des propriétés aromatiques selon le Règlement CE n° 1334/2008, ou tout autre composé aromatique acceptable d'un point de vue alimentaire, auquel s'ajoute(nt) un ou plusieurs ingrédients connus de l'homme de l'art tels qu'un support solide ou liquide ou véhicule, ou un adjuvant, acceptables d'un point de vue alimentaire, lequel mélange étant apte à être ajouté à des denrées alimentaires dans le but principal de leur conférer une flaveur ou de modifier leur flaveur.

Ladite composition aromatique selon l'invention peut se présenter sous forme d'une composition de base, à diluer préalablement à l'emploi, ou sous forme d'une composition finie, prête à l'emploi. Elle peut être liquide ou solide.

Le support ou véhicule acceptable aux fins alimentaires est notamment choisi pour dissoudre, diluer, disperser ou modifier physiquement le dérivé du 6-cyclopentylidènehexane de formule (I) sans modifier sa fonction, afin d'en faciliter son maniement, son application ou son utilisation (voir également l'annexe I du Règlement 1333/2008).

Des exemples non limitatifs de supports ou véhicules acceptables aux fins alimentaires figurent par exemple dans la partie I de l'annexe III nouvellement amendée du Règlement 1333/2008 entrant en vigueur en 2011.

De façon préférentielle, ledit support ou véhicule susmentionné et choisi pour son innocuité et ses caractéristiques organoleptiques neutres. En particulier, il n'est
- ni du méthyle tert-butyle éther (MTBE), ni du toluène, s'agissant du 6-cyclopentylidènehexan-1-ol (I'),
- ni du dichlorométhane, s'agissant du 6-cyclopentylidènehexanal (I"), lesdits méthyle tert-butyle éther, toluène et dichlorométhane étant par ailleurs non désirés du fait de leur toxicité et de leur propriété organoleptique non neutre.

A titre d'illustration non limitative, la composition organoleptique peut être incorporée dans toute formulation connue de l'homme de l'art, celle-ci pouvant être de façon non limitative une mousse, une lotion, une huile, un gel, une crème, une poudre de talc, une pommade, un aérosol, une émulsion, ou un solvant. La composition organoleptique peut par ailleurs être encapsulée selon toute technique connue de l'homme de l'art.

La composition organoleptique selon l'invention trouve ses applications dans divers secteurs industriels dont notamment la parfumerie, la cosmétologie, l'hygiène corporelle, l'hygiène ménagère ou encore l'alimentaire pour modifier, améliorer ou renforcer un goût, une saveur.

Des exemples non limitatifs de compositions parfumantes pour la parfumerie comprennent les accords et les bases pour parfum qui constituent des exemples préférés de compositions parfumantes dans lesquelles le dérivé du 6-cyclopentylidènehexane de formule (I) peut être avantageusement utilisé. Les parfums, les eaux de parfum, les eaux de toilettes, les eaux de Cologne, les onguents, les lotions après rasage, constituent d'autres exemples de compositions ou de produits finis dans lesquels un dérivé du 6-cyclopentylidènehexane de formule (I) apporte sa note originale.

Des exemples non limitatifs de compositions parfumantes pour la cosmétologie comprennent notamment toute préparation cosmétique telle que les crèmes, les baumes, les lotions, les talcs ou les poudres de toute nature, mais également une lotion pour la peau, une préparation capillaire telle qu'une coloration ou un traitement capillaire, et tout autre support connu.

Un dérivé de formule (I) peut également être incorporé dans toutes compositions parfumantes pour l'hygiène corporelle, comprenant de façon non limitative, les crèmes, les savons liquides ou solides, les produits pour la douche ou le bain (gel douche...), ou les déodorants, qu'ils soient sous forme de sticks ou de lotions, les shampooings et les produits pileux ou capillaires de tout type, les laques, mais également, les déodorants corporels, ou encore les compositions anti-transpirantes, ou les compositions anti-bactériennes.

Toutes compositions parfumantes pour l'hygiène ménagère constituent également des exemples de compositions ou de produits finis dans lesquels le dérivé du 6-cyclopentylidènehexane de formule (I) apporte sa note originale. Cela vise notamment les désodorisants de l'air ambiant, détergents, les composés rafraichissants appliqués sur le linge, les produits d'entretien, les détergents solides ou liquides, les assouplissants, de l'eau pour fer à repasser, des désinfectants, décontaminants, de l'eau de javel parfumée, les éponges parfumées, les liquides vaisselle, et tout autre produit ménager.

Des exemples de compositions dans lesquelles les composés de formule (I) peuvent être introduits de façon avantageuse, sont par exemple des compositions détergentes usuelles. Ces compositions comprennent généralement un ou plusieurs des ingrédients suivants : agents tensio-actifs anioniques, cationiques ou amphotères, agents de blanchiment, azurants optiques, charges diverses, agents anti-redéposition.

L'incorporation d'un dérivé du 6-cyclopentylidènehexane de formule (I) a une composition aromatique pour l'industrie alimentaire en tant qu'arôme alimentaire vise tout type de produits aromatisés tels que les produits laitiers, les desserts, les plats préparés, les bouillons, ou tout autre produit alimentaire.

Enfin, un dérivé de formule (I) peut également parfumer des articles de type textile, papier et tout autre matériau tel que le bois, les éponges, les lingettes, le linge de maison, les papiers essuie-tout, etc, soit par application direct dudit dérivé à la surface de l'article soit par application d'une composition organoleptique susmentionnée.

La nature de ces divers composants n'est pas critique et le dérivé du 6-cyclopentylidènehexane de formule (I) peut être ajouté à tout type de composition en vue d'en retirer un avantage sensoriel, en particulier organoleptique, olfactif ou gustatif, ce dernier pouvant être singulier et/ou puissant et/ou persistant ou en encore d'en retirer un avantage économique de par le faible coût de production et la faible quantité nécessaire à fort impact.

La teneur des compositions selon l'invention en dérivé du 6-cyclopentylidènehexane de formule (I), est exprimée en pourcentage en poids ou en quantité dans la composition finale considérée. La quantité efficace dépend (i) du dérivé choisi, (ii) de la nature de ladite composition (base pour parfum ou eau de toilette prête à emploi par exemple), (iii) de la puissance, (iv) de la persistance de l'agent sensoriel, et (v) de la nature de l'effet recherché au niveau produit final. Il va de soi que dans une base pour parfum la quantité efficace en dérivé du 6-cyclopentylidènehexane de formule (I) peut varier largement. Par exemple la teneur peut-être supérieure à 5% tandis que dans un parfum, une eau de toilette ou une lotion après rasage, cette quantité efficace pourra être très largement inférieure à 50% en poids. La composition organoleptique selon l'invention comprend entre 0,001 % et 10 % en poids du composé de formule (I), notamment entre 0,001 % et 5% en poids, entre 0,005 et 2 % ou bien entre 0,01 et 2% en poids du composé de formule (I).

Ainsi la limite inférieure de la quantité efficace en dérivé du 6-cyclopentylidènehexane de formule (I), peut être celle qui provoque une modification perceptible à l'odorat et/ ou au goût du produit fini. Dans certains cas, cette teneur minimale peut être de l'ordre de 0,001% en poids ou de l'ordre de 0,01% en poids.

La quantité efficace en dérivé du 6-cyclopentylidènehexane de formule (I) peut être dans les compositions détergentes, notamment ménagères ou dans des savons, de l'ordre de 0,001 à 5% en poids, de préférence de l'ordre de 0,01% à 2% en poids.

Ils peuvent également intervenir dans les produits capillaires et savons parfumés à raison de 0,005 à 2% en poids.

On peut évidemment faire appel à des quantités non comprises dans les limites des quantités efficaces indiquées ci-avant sans pour autant sortir du cadre de la présente invention.

L'invention a également pour objet une composition ou un article parfumé comprenant ou bien à la surface duquel est appliqué au moins un composé de formule (I) selon la revendication 1 ou bien une composition organoleptique telle que définie précédemment.

La présente invention vise également un procédé visant à modifier les propriétés sensorielles, notamment organoleptiques, et plus particulièrement olfactives ou gustatives, d'une substance, d'une composition ou d'un article comprenant au moins une des étapes suivantes :
- l'addition d'un composé de formule (I) à ladite substance, ladite composition ou ledit article, ou
- l'application d'un composé de formule (I) à la surface dudit article.

Le composé de formule (I) peut être incorporé de cette manière à tout type de composition ou article, notamment aux formulations ou préparations décrites précédemment.

Le 6-cyclopentylidènehexan-1-ol (I') est obtenu en une seule étape, par condensation de Wittig du bromure de (6-hydroxyhexyle)triphénylphosphonium, déprotoné à l'aide d'une base appropriée telle que le tertio-butylate de potassium, sur la cyclopentanone, qui est une matière première courante et peu coûteuse. La température réactionnelle de l'étape susmentionnée est de préférence comprise entre 10 et 110 °C, préférentiellement entre 70 et 90 °C, et plus préférentiellement est de 70 °C.

Le 6-cyclopentylidènehexanal (I") est obtenu dans des conditions réactionnelles douces, par oxydation, notamment par l'oxygène de l'air, du 6-cyclopentylidènehexan-1-ol (I') en une seule étape. Seule une faible quantité de catalyseur à base de platine est requise. Par ailleurs, toute utilisation de réactifs présentant une certaine toxicité et/ou susceptibles de nuire aux propriétés sensorielles des composés finaux, tel que le diméthylsulfoxyde (DMSO), qui, une fois réduit en diméthylsulfate (DMS), possède une odeur soufrée particulièrement tenace et désagréable est de préférence bannie. De plus, le catalyseur pourra être récupéré et réutilisé pour une prochaine réaction d'oxydation de I'. La température réactionnelle de l'étape d'oxydation susmentionnée est de préférence comprise entre 60 et 100 °C, préférentiellement entre 70 et 90 °C, et plus préférentiellement est de 80 °C.

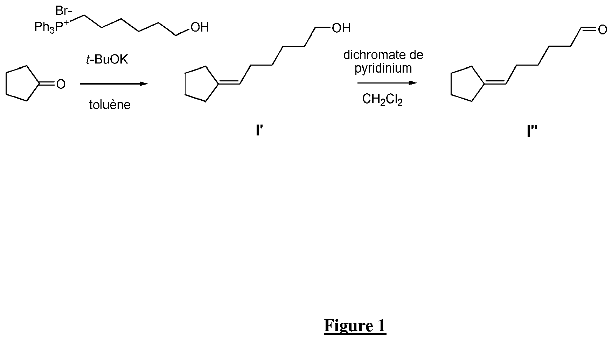

D'autres caractéristiques et avantages de l'invention apparaîtront plus clairement à la lecture de la description suivante de modes de réalisation préférentiels, donnés à titre de simples exemples illustratifs et non limitatifs, et de la figure 1.

Cette dernière présente le schéma général de synthèse des dérivés du 6-cyclopentylidènehexane de formule (I). Dans une première étape, la cyclopentanone subit une condensation de Wittig du bromure de (6-hydroxyhexyle)triphénylphosphonium, déprotoné à l'aide d'une base appropriée telle que le tertio-butylate de potassium, dans un solvant approprié tel que le toluène. Puis, dans une deuxième étape, l'alcool I' ainsi obtenu est oxydé par l'oxygène de l'air en présence d'une faible quantité de catalyseur recyclable à base de platine, dans un solvant approprié tel que le toluène, pour conduire à l'aldéhyde I".

### Exemple 1 : Préparation du 6-cyclopentylidènehexan-1-ol (I')

A titre d'exemple non limitatif, on présente ci-après un mode de réalisation particulier de l'invention, pour l'obtention du 6-cyclopentylidènehexan-1-ol (I').

Dans un ballon, on place un équivalent de bromure de (6-hydroxyhexyle)triphénylphosphonium (264,53 g / 0,60 mole) et environ un équivalent de tertio-butylate de potassium (70,0 g / 0,62 mole) dans 550 ml de toluène sec. On agite cette suspension à 70 °C pendant 2 heures. Puis, on ajoute environ un équivalent de cyclopentanone (50,0 g / 0,59 mole) diluée dans 450 ml de toluène sec, très lentement. On agite à 70 °C pendant 5 heures. On laisse le milieu réactionnel revenir à température ambiante. Puis on le verse sur 300 ml d'une solution de HCl à 10%. Les phases sont séparées. La phase organique est lavée avec 200 ml d'une solution aqueuse saturée de bicarbonate de sodium puis avec 200 ml d'eau salée. Après séchage sur sulfate de magnésium, filtration sur papier et évaporation du solvant, le produit brut est placé dans 200 ml d'éther de méthyle et de tertio-butyle (MTBE) au réfrigérateur pendant une nuit. Le précipité formé est filtré sur fritté et rincé au MTBE. Le filtrat est concentré puis le produit brut contenant le 6-cyclopentylidènehexan-1-ol I' est distillé sous pression réduite : sa température d'ébullition est de 80 °C sous 0,4 torr.

Le 6-cyclopentylidènehexan-1-ol (I') ainsi obtenu présente les caractéristiques spectrales suivantes :
**1H-NMR** (200 MHz, CDCl₃): δ (ppm) 1,34-1,38 (m, 4H), 1,57-1,64 (m, 6H), 1,81 (s, 1H), 1,96-1,99 (m, 2H), 2,17-2,22 (m, 4H), 3,63 (t, J = 6,4 Hz, 2H), 5,19-5,28 (m, 1H).
**13C-NMR** (50 MHz, CDCl₃): δ (ppm) 25,42, 26,30, 26,38, 28,54, 29,45, 29,49, 32,67, 33,50, 62,88, 119,94, 143,16.
**MS** [e/m (%)]: 168 (M+, 15), 121 (15), 109 (10), 108 (10), 107 (12), 96 (12), 95 (66), 94 (19), 93 (37), 91 (17), 83 (13), 82 (41), 81 (24), 80 (29), 69 (10), 68 (24), 67 (100), 55 (20), 53 (14), 41 (35), 39 (14).
**IR** (film, cm⁻¹): 853w, 1054 w, 1433m, 1450m, 2861m, 2932s, 3320m.

Test d'évaluation olfactif et test comparatif d'évaluation olfactif et de puissance : L'évaluation a été menée en aveugle en boxes individuels par un panel de sept évaluateurs dûment formés à cet escient. La fiche d'évaluation précise au besoin le solvant utilisé qui peut être de façon non limitative le dipropylène glycol ou de l'éthanol alimentaire ou tout autre véhicule approprié. Les évaluateurs ont à leur disposition l'échantillon à évaluer dans lequel ils trempent une mouillette support (mouillette de tête), ainsi qu'une mouillette de fond (trempée dans le même échantillon 24 heures auparavant).

Chaque évaluateur donne une description olfactive en 3 à 6 descripteurs environ pour chacune des mouillettes, de tête et de fond. Il peut s'il le souhaite nommer une matière première existante qui selon lui s'apparente le plus, de par ses propriétés olfactives, à l'échantillon évalué.

Dans le cas d'une évaluation comparative, chaque évaluateur doit en plus des étapes précédentes, classer les échantillons comparés selon leur puissance, du plus au moins puissant. Cette étape s'effectue également en aveugle.

Les descripteurs olfactifs les plus fréquemment cités déterminent les familles et sous-familles olfactives du composé évalué :
- le descripteur le plus fréquent détermine la famille olfactive principale,
- le deuxième descripteur le plus fréquent détermine la première sous-famille olfactive,
- le troisième descripteur le plus fréquent détermine la deuxième sous-famille, etc.

Les divers classements de puissance sont également compilés en vue de déterminer un classement final. Enfin, l'impact en formule des composés évalués est hiérarchisé selon un ordre de préférence global.

Au final, chaque composé évalué est caractérisé par environ trois à cinq descripteurs cités par ordre d'importance, un ordre de grandeur de sa puissance olfactive par rapport à des composés donnés, et l'impact en formule par rapport à des composés donnés.

Le tableau 1 ci-dessous présente l'évaluation sensorielle de l'alcool I' ainsi obtenu, le 6-cyclopentylidènehexan-1-ol, comparativement à celle du géraniol et du citronellol. Aux fins de l'évaluation, tous les composés sont testés à 10% en poids dans le dipropylène glycol ou l'éthanol alimentaire.

**Tableau 1**

| **Composé** | **Note** | **Puissance** | **Rémanence** |
|---|---|---|---|
| 6-cyclopentyli-dènehexan-1-ol | Fleurie, rosée, géranium, métallique, hespéridée | ++ | +++ |
| Géraniol | Fleurie, rosée, plus citronnée, poivrée | ++ | +++ |
| CAS : 106-24-1 | | | |
| Citronellol | Fleurie, rosée, plus rosée, métallique, douce | +++ | ++ |
| CAS : 106-22-9 | | | |

### Exemple 2 : Préparation du 6-cyclopentylidènehexanal (I")

L'obtention du 6-cyclopentylidènehexanal (I") fournie ci-après constitue un autre mode de réalisation particulier de l'invention.

On place dans le ballon 1,25% molaire de platine (5,8 g de catalyseur contenant 5% en masse de platine et 1% en masse de bismuth sur du charbon / 1,49 mmoles de platine) et un équivalent de l'alcool de formule I' (20 g / 0,12 mole) dans du toluène. On agite vigoureusement la suspension à 80 °C en y faisant buller de l'air pendant une nuit. Lorsque la conversion de I' est satisfaisante, on filtre le milieu réactionnel sur fritté. Le catalyseur à base de platine est récupéré sur le fritté pour être réutilisé tel quel dans une prochaine réaction d'oxydation de I'. Le filtrat contenant le 6-cyclopentylidènehexanal I" est concentré puis distillé sous pression réduite : sa température d'ébullition est de 59 °C sous 0,2 torr.

Le 6-cyclopentylidènehexanal (I") ainsi obtenu présente les caractéristiques spectrales suivantes :
**1H-NMR** (200 MHz, CDCl₃): δ (ppm) 1,30-1,46 (m, 2H), 1,55-1,72 (m, 6H), 1,94-2,04 (m, 2H), 2,12-2,24 (m, 4H), 2,43 (td, J = 7,0 Hz et J = 1,8 Hz, 2H), 5,17-5,26 (m, 1H), 9,76 (t, J = 1,8 Hz, 1H).
**13C-NMR** (50 MHz, CDCl₃): δ (ppm) 21,72, 26,29, 26,36, 28,58, 29,13, 29,20, 33,51, 43,81, 119,35, 143,64, 202,82.
**MS** [e/m (%)]: 166 (M+, 2), 148 (50), 119 (18), 107 (13), 97 (10), 95 (69), 94 (12), 93 (38), 91 (23), 82 (13), 81 (29), 80 (39), 79 (48), 77 (21), 68 (15), 67 (100), 65 (14), 55 (21), 53 (16), 41 (46), 39 (27).
**IR** (film, cm⁻¹): 851w, 1390w, 1451w, 1724s, 2715w, 2845m, 2936s.

Le tableau 2 suivant présente l'évaluation sensorielle de l'aldéhyde (I"), le 6-cyclopentylidènehexanal, comparativement à celle de la Calone® et du trans-2-dodécenal. Les composés sont testés à 1% en poids dans le dipropylène glycol. L'évaluation a été menée en aveugle par un panel de sept évaluateurs selon les mêmes recommandations figurant dans l'exemple 1.

**Tableau 2**

| Composé | Note | Puissance | Rémanence |
|---|---|---|---|
| 6-cyclopentyli-dènehexanal | Aldéhydée, aqueuse, melon, ozonique, marine | ++++ | +++ |
| Calone® ou 7-méthyl-3,4-dihydro-2H-1,5-benzodioxepin-3-one (Pfizer and Co., Etats-Unis) | Marine, salée, embruns | ++ | +++ |
| Trans-2-dodécénal | Aldéhydée, mandarine, coriandre, grasse | +++ | ++ |

### Exemple 3 : Composition parfumante C incorporant le 6-cyclopentyli-dènehexanal (I") obtenu selon l'exemple 2.

Le test d'une évaluation olfactive comparative étendue à l'étude de l'impact des composés donnés dans diverses formules est effectué comme suit. Une même formule ou accord est réalisée d'une part sans aucune matière première faisant partie des composés en comparaison, d'autre part séparément avec chacune des matières premières comparées, à un dosage adapté à sa puissance olfactive. Afin de déterminer un ordre de préférence de l'impact des composés comparés dans une même formule, les formules ou accords ainsi préparés font à leur tour l'objet d'une évaluation comparative à l'aveugle.

Les trois accords suivants ont été préparés : un accord tamarine A, puis le même accord tamarine A comprenant en outre le trans-2-dodécénal pour donner l'accord B, et enfin le même accord tamarine A comprenant le 6-cyclopentylidènehexanal (I") pour donner l'accord C. Leurs formulations sont décrites ci-dessous et sont utilisées comme bases parfumantes : ils sont incorporés à 1% en poids dans un gel douche prêt à l'emploi.

| **Ingrédients** | **Accord A** | **Accord B** | **Accord C** |
|---|---|---|---|
| ALDEHYDE C08 | 0,05 | 0,05 | 0,05 |
| LINALOL | 7,40 | 7,40 | 7,40 |
| LIMONENE | 28,00 | 28,00 | 28,00 |
| OXANE ou 2-méthyl-4-propyl-1,3-oxathiane (Firmenich, Suisse) | 0,70 | 0,70 | 0,70 |
| PARACYMENE | 10,00 | 10,00 | 10,00 |
| THYMOL | 0,90 | 0,90 | 0,90 |
| ALDEHYDE C12 LAURIQUE | 0,15 | 0,15 | 0,15 |
| 1,3,5-UNDECATRIENE | 0,20 | 0,20 | 0,20 |
| METHYLE ANTHRANILATE DE METHYLE | 10,00 | 10,00 | 10,00 |
| DIPROPYLENE GLYCOL | 42,60 | 41,70 | 42,51 |
| **TRANS 2 DODECENAL** | **0,00** | **0,90** | **0,00** |
| **6-cyclopentylidènehexanal (I")** | **0,00** | **0,00** | **0,09** |

L'évaluation comparative des accords A, B et C à 1% en poids en base gel douche montre que l'ajout du trans-2-dodécénal à hauteur de 0,9%, dans l'accord B apporte de l'amertume en tête mais son impact s'effondre en coeur. L'ajout du 6-cyclopentylidènehexanal (I") à hauteur de seulement 0,09% dans l'accord C apporte une facette plus aldéhydée, métallique, aqueuse par rapport aux accords A et B.

### Exemple 4 : Composition parfumante F incluant le 6-cyclopentyli-dènehexanal (I") obtenu selon l'exemple 2.

L'évaluation olfactive comparative étendue à l'étude de l'impact des composés donnés en formules est réalisée selon le test décrit dans l'exemple 3.

Des eaux de toilette féminines ont été préparées en incorporant 10% en poids des trois formules parfumantes décrites ci-dessous dont une contient le 6-cyclopentylidènehexanal (I") et une contient de la Calone® :

| **Ingrédients** | **Accord D** | **Accord E** | **Accord F** |
|---|---|---|---|
| GAMMA NONALACTONE | 0,05 | 0,05 | 0,05 |
| ESSENCE DE CITRON | 2,00 | 2,00 | 2,00 |
| ESSENCE DE BERGAMOTE | 2,00 | 2,00 | 2,00 |
| COUMARINE | 0,30 | 0,30 | 0,30 |
| MUSC T® ou éthylène brassylate (Takasago, Japon) | 5,00 | 5,00 | 5,00 |
| SALICYLATE DE BENZYLE | 18,00 | 18,00 | 18,00 |
| SALICYLATE DE CIS-3-HEXENYLE DIHYDROJASMONATE DE | 3,00 | 3,00 | 3,00 |
| METHYLE | 20,00 | 20,00 | 20,00 |
| VANILLINE | 0,50 | 0,50 | 0,50 |
| GALAXOLIDE® ou 1,3,4,6,7,8-hexahydro-4,6,6,7,8,8-hexaméthylcyclopenta-(g)-2-benzopyranne (IFF, Etats-Unis) | 20,00 | 20,00 | 20,00 |
| ESSENCE D'YLANG | 1,50 | 1,50 | 1,50 |
| ANTHRANILATE DE METHYLE | 0,10 | 0,10 | 0,10 |
| DIPROPYLENE GLYCOL | 27,55 | 25,55 | 27,35 |
| **CALONE®** ou 7-méthyl-3,4-dihydro-2H-1,5-benzodioxepin-3-one (Pfizer and | **0,00** | **2,00** | **0,00** |
| Co., Etats-Unis). **6-cyclopentylidènehexanal (I")** | **0,00** | **0,00** | **0,20** |

L'évaluation comparative des accords D, E et F à 10% en poids en base alcoolique : L'ajout de 2% de Calone® dans l'accord E apporte une facette marine. L'ajout de seulement 0,2% du 6-cyclopentylidènehexanal (I") dans l'accord F apporte une facette très aqueuse, aldéhydée, métallique par rapport à l'accord D. L'impact du 6-cyclopentylidènehexanal (I") est toujours remarquable après quatre jours.

### Exemple 5 : Compositions parfumantes H et I incorporant un dérivé du 6-cyclopentylidènehexane obtenu selon les exemples 1 et 2.

L'évaluation olfactive comparative étendue à l'étude de l'impact des composés donnés en formules est réalisée selon le test décrit dans l'exemple 3.

Un accord muguet-poire G puis le même accord comprenant le 6-cyclopentylidènehexanal (I") pour donner l'accord H, puis le même accord comprenant le 6-cyclopentylidènehexan-1-ol (I') pour donner l'accord I dont les formulations sont décrites ci-dessous sont utilisés comme bases parfumantes : ils sont préparés puis incorporés à 1% en poids dans un assouplissant prêt à l'emploi

| **Ingrédients** | **Accord G** | **Accord H** | **Accord I** |
|---|---|---|---|
| ACETATE D'HEXYLE | 1,10 | 1,10 | 1,10 |
| DIHYDROMYRCENOL® ou 2,6-diméthyl-7-octèn-2-ol (IFF, Etats-Unis) | 0,20 | 0,20 | 0,20 |
| ALCOOL PHENYLETHYLIQUE | 22,20 | 22,20 | 22,20 |
| LINALOL | 6,70 | 6,70 | 6,70 |
| ACETATE DE BENZYLE | 2,20 | 2,20 | 2,20 |
| ACETATE DE STYRALLYLE | 0,20 | 0,20 | 0,20 |
| FRESKOMENTHONE | 0,30 | 0,30 | 0,30 |
| ACETATE DE DIMETHYLBENZYLE CARBINOL | 0,10 | 0,10 | 0,10 |
| ALDEHYDE CYCLAMEN | 3,30 | 3,30 | 3,30 |
| LILIAL® ou para-tert-butyl-alpha-méthylhydrocinnamaldéhyde (Givaudan, Suisse) | 11,00 | 11,00 | 11,00 |
| ALDEHYDE C14 | 0,70 | 0,70 | 0,70 |
| DIHYDROJASMONATE DE METHYLE | 4,50 | 4,50 | 4,50 |
| CITRONELLOL | 13,50 | 13,50 | 13,50 |
| TERPINEOL | 2,20 | 2,20 | 2,20 |
| HELIOTROPINE | 0,80 | 0,80 | 0,80 |
| GALAXOLIDE® ou 1,3,4,6,7,8-hexahydro-4,6,6,7,8,8-hexaméthylcyclopenta-(g)-2-benzopyranne (IFF, Etats-Unis) | 5,50 | 5,50 | 5,50 |
| PHENOXANOL® ou 3-méthyl-5-phénylpentan-1-ol (IFF, Etats-Unis) | 1,70 | 1,70 | 1,70 |
| ALDEHYDE CINNAMIQUE | 0,20 | 0,20 | 0,20 |
| ALDEHYDE HEXYLE CINNAMIQUE | 3,30 | 3,30 | 3,30 |
| TRIPLAL® ou 2,4-diméthyl-3-cyclohexèn-1-carbaldéhyde (IFF, Etats-Unis) | 0,60 | 0,60 | 0,60 |
| ANTHRANILATE DE METHYLE | 0,10 | 0,10 | 0,10 |
| DIPROPYLENE GLYCOL | 19,60 | 18,50 | 18,50 |
| **6-cyclopentylidènehexanal (I")** | **0,00** | **1,10** | **0,00** |
| **6-cyclopentylidènehexan-1-ol (I')** | **0,00** | **0,00** | **1,10** |

L'évaluation comparative des accords G, H et là 1% en poids en base assouplissant montre que l'ajout du 6-cyclopentylidènehexanal (I") en base assouplissant dans l'accord H accentue très notablement la facette aldéhydée, aqueuse par rapport à l'accord G et que l'ajout du 6-cyclopentylidènehexan-1-ol (I') en base assouplissant dans l'accord I accentue également la facette aqueuse ainsi que la note fleurie et apporte de la puissance à l'ensemble par rapport à l'accord G.

### Exemple 6 : Composition parfumante K incorporant le 6-cyclopentylidènehexan-1-ol (I') obtenu selon l'exemple 1.

L'évaluation olfactive comparative étendue à l'étude de l'impact des composés donnés en formules est réalisée selon le test décrit dans l'exemple 3.

Un accord muguet J puis le même accord comprenant le 6-cyclopentylidènehexan-1-ol (I') pour donner l'accord K, dont les formulations sont décrites ci-dessous sont utilisés comme bases parfumantes : ils sont préparés puis incorporés à 10% en poids dans une eau de toilette prête à l'emploi :

| **Ingrédients** | **Accord J** | **Accord K** |
|---|---|---|
| ALCOOL PHENYLETHYLIQUE | 37 | 37 |
| SALICYLATE DE BENZYLE | 38 | 38 |
| ALDEHYDE HEXYLE CINNAMIQUE | 19 | 19 |
| LYRAL® ou 4-(4,hydroxy-4-méthylpentyl)-3-cyclohexène-1-carboxaldéhyde (IFF, Etats-Unis) | 5 | 5 |
| DIPROPYLENE GLYCOL | 1 | 0 |
| **6-cyclopentylidènehexan-1-ol (I')** | **0** | **1** |

L'évaluation comparative des accords J et K à 10% en poids en base alcoolique montre que l'ajout du 6-cyclopentylidènehexan-1-ol (I') dans l'accord K accentue les notes fleurie et muguet et comparativement à l'accord J, il apporte du naturel à la note.

### Exemple 7 : Composition parfumante M incorporant le 6-cyclopentylidènehexan-1-ol (I') obtenu selon l'exemple 1.

L'évaluation olfactive comparative étendue à l'étude de l'impact des composés donnés en formules est réalisée selon le test décrit dans l'exemple 3.

Un accord L « melon d'eau - fleurs blanches » puis le même accord comprenant le 6-cyclopentylidènehexan-1-ol (I') pour donner l'accord M, dont les formulations sont décrites ci-dessous sont utilisés comme bases parfumantes : ils sont préparés puis incorporés à 1% en poids dans un désodorisant d'ambiance prêt à l'emploi :

| **Ingrédients** | **Accord L** | **Accord M** |
|---|---|---|
| ABRAC OSYROL | 4,00 | 4,00 |
| BACDANOL® ou 4-(2,2,3-triméthyl-3-cyclopentyl)-2-éthyl-3-butèn-1-ol (IFF, Etats-Unis) | 1,00 | 1,00 |
| ALCOOL PHENYLETHYLIQUE | 3,00 | 3,00 |
| BOURGEONAL® ou 4-(1,1-diméthyléthyl)-benzène propanal (Givaudan, Suisse) | 0,20 | 0,20 |
| CALONE® OU 7-méthyl-3,4-dihydro-2H-1,5-benzodioxepin-3-one (Pfizer and Co., Etats-Unis). | 0,10 | 0,10 |
| CANTHOXAL® ou 2-méthyl-3-(para-méthoxyphényl)-propanal (IFF, Etats-Unis) | 0,20 | 0,20 |
| CORPS MOUSSE | 0,20 | 0,20 |
| CYCLOGALBANATE® ou cyclohexyloxyacétate de 2-propényle (Symrise, Allemagne) | 0,10 | 0,10 |
| HYDROXYCITRONELLAL | 1,00 | 1,00 |
| HEXYLCINNAMALDEHYDE | 2,00 | 2,00 |
| LYRAL® ou 4-(4,hydroxy-4-méthylpentyl)-3-cyclohexène-1-carboxaldéhyde (IFF, Etats-Unis) | 22,00 | 22,00 |
| ISOPAR L | 9,00 | 9,00 |
| DIHYDROJASMONATE DE METHYLE | 14,00 | 14,00 |
| ALPHA ISO METHYLIONONE | 6,20 | 6,20 |
| MUSC T® ou éthylène brassylate (Takasago, Japon) | 5,00 | 5,00 |
| HELIONAL® ou 2-méthyl-3-(3',4'-méthylène-dioxyphényl)-propanal (IFF, Etats-Unis) | 3,00 | 3,00 |
| GALAXOLIDE® ou 1,3,4,6,7,8-hexahydro-4,6,6,7,8,8-hexaméthylcyclopenta-(g)-2-benzopyranne (IFF, Etats-Unis) | 6,00 | 6,00 |
| TETRAMETHYLOCTAHYDROACTONAPHTONE | 3,00 | 3,00 |
| CYCLOPENTADECANOLIDE | 4,00 | 4,00 |
| SANDELA ® ou 3-(2,2,3-triméthylnorbornan-5-yl)-cyclohexan-1-ol (Givaudan, Suisse) | 6,00 | 6,00 |
| DIPROPYLENE GLYCOL | 10,00 | 9,90 |
| **6-cyclopentylidènehexan-1-ol (I')** | **0,00** | **0,10** |

L'évaluation comparative des accords L et M à 1% en poids dans un désodorisant d'ambiance montre que l'ajout du 6-cyclopentylidènehexan-1-ol (I') dans l'accord M accentue la facette juteuse, aqueuse et confère de la puissance à la note par rapport à l'accord L.

## Revendications

1. Utilisation d'un composé de formule (I) 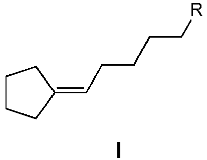 pour lequel **R** représente un radical CHO ou un radical CH₂OH,
comme agent organoleptique pour conférer, modifier ou renforcer les propriétés organoleptiques d'une substance, d'une composition ou d'un article.

2. Utilisation d'un composé de formule (I) selon la revendication 1, comme agent parfumant pour conférer, modifier, ou renforcer les propriétés olfactives d'une substance, d'une composition ou d'un article.

3. Utilisation d'un composé de formule (I) selon la revendication 1, comme agent aromatique pour conférer, modifier, ou renforcer les propriétés gustatives d'une substance, d'une composition ou d'un article.

4. Utilisation d'un composé de formule (I) selon la revendication 2, comme agent de neutralisation d'odeur ou de masquage d'odeur.

5. Utilisation d'un composé de formule (I) selon la revendication 1, dans laquelle R représente CHO, pour donner à une substance, une composition ou un article, une note aqueuse, marine, ozonique, aldéhydée et fruitée.

6. Utilisation d'un composé de formule (I) selon la revendication 1, dans laquelle R représente CH2OH, pour donner à une substance, une composition ou un article, une note fleurie avec des émanations rosées et citronnées.

7. Composition organoleptique comprenant :
- entre 0,001 % et 10 % en poids d'un dérivé du 6-cyclopentylidènehexane de formule (I) selon la revendication 1,
- un support organoleptiquement acceptable, tel qu'un solvant ou une émulsion,
- optionnellement, un adjuvant, et
- optionnellement, un co-ingrédient parfumant ou aromatique.

## Patentansprüche

1. Verwendung einer Verbindung mit der Formel (I) 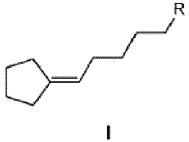 bei welcher **R** für einen CHO-Rest oder einen CH₂OH-R est steht,
als organoleptisches Mittel zum Verleihen, Verändern oder Verstärken der organoleptischen Eigenschaften eines Stoffes, einer Zusammensetzung oder eines Artikels.

2. Verwendung einer Verbindung mit der Formel (I) nach Anspruch 1 als Parfümiermittel zum Verleihen, Verändern oder Verstärken der olfaktorischen Eigenschaften eines Stoffes, einer Zusammensetzung oder eines Artikels.

3. Verwendung einer Verbindung mit der Formel (I) nach Anspruch 1 als Aromamittel zum Verleihen, Verändern oder Verstärken der gustatorischen Eigenschaften eines Stoffes, einer Zusammensetzung oder eines Artikels.

4. Verwendung einer Verbindung mit der Formel (I) nach Anspruch 2 als Geruchsneutralisierungsmittel oder Geruchsmaskierer.

5. Verwendung einer Verbindung mit der Formel (I) nach Anspruch 1, bei welcher R für CHO steht, um einem Stoff, einer Zusammensetzung oder einem Artikel eine Wasser-, Meeres-, Ozon-, Aldehyd- oder Fruchtnote zu geben.

6. Verwendung einer Verbindung mit der Formel (I) nach Anspruch 1, bei welcher R für CH₂OH steht, um einem Stoff, einer Zusammensetzung oder einem Artikel eine blumige Note mit Rosen- oder Zitronenausgasungen zu geben.

7. Organoleptische Zusammensetzung, welche umfasst:
- zwischen 0,001 und 10 Gewichtsprozent eines 6-Cyclopentylidenhexan-Derivats mit der Formel (I) nach Anspruch 1,
- einen organoleptisch akzeptablen Träger, wie beispielsweise ein Lösungsmittel oder eine Emulsion,
- optionell einen Zusatzstoff, und
- optionell einen parfümierenden oder aromatischen Mitinhaltsstoff.

## Claims

1. Use of a compound of formula (I) 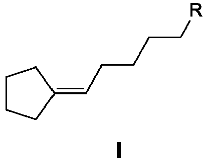 for which **R** represents a CHO radical or a CH₂OH radical,
as an organoleptic agent for conferring, modifying or reinforcing the organoleptic properties of a substance, of a composition or of an article.

2. Use of a compound of formula (I) according to Claim 1, as a fragrancing agent for conferring, modifying or reinforcing the olfactory properties of a substance, of a composition or of an article.

3. Use of a compound of formula (I) according to Claim 1, as an aromatic agent for conferring, modifying or reinforcing the gustative properties of a substance, of a composition or of an article.

4. Use of a compound of formula (I) according to Claim 2, as an odor-neutralizing or odor-masking agent.

5. Use of a compound of formula (I) according to Claim 1, in which R represents CHO, for giving a substance, a composition or an article an aqueous, marine, ozonic, aldehyde and fruity note.

6. Use of a compound of formula (I) according to Claim 1, in which R represents CH₂OH, for giving a substance, a composition or an article a flowery note with rose and lemon smells.

7. Organoleptic composition comprising:
- between 0.001% and 10% by weight of a 6-cyclopentylidenehexane derivative of formula (I) according to Claim 1,
- an organoleptically acceptable support, such as a solvent or an emulsion,
- optionally, an adjuvant, and
- optionally, a fragrancing or aromatic co-ingredient.
